(19) **Europäisches Patentamt / European Patent Office / Office européen des brevets**

(11) **EP 1 477 970 B1**

(12) **EUROPEAN PATENT SPECIFICATION**

(45) Date of publication and mention of the grant of the patent:
**05.08.2009 Bulletin 2009/32**

(51) Int Cl.:
*G11B 7/005* (2006.01)          *G11B 7/125* (2006.01)
*G11B 11/105* (2006.01)

(21) Application number: **03701778.7**

(22) Date of filing: **17.01.2003**

(86) International application number:
**PCT/JP2003/000383**

(87) International publication number:
**WO 2003/063146 (31.07.2003 Gazette 2003/31)**

(54) **DISK DRIVE**

PLATTENLAUFWERK

LECTEUR DE DISQUE

(84) Designated Contracting States:
**DE FR GB**

(30) Priority: **23.01.2002 JP 2002014049**

(43) Date of publication of application:
**17.11.2004 Bulletin 2004/47**

(73) Proprietor: **SANYO ELECTRIC CO., LTD.
Moriguchi-shi, Osaka 570-8677 (JP)**

(72) Inventors:
• **MINECHIKA, Shigekazu
Kishiwada-shi, Osaka 596-0825 (JP)**

• **OKAJIMA, Tadashi
Yao-shi, Osaka 581-0018 (JP)**
• **HISAMITSU, Takanobu
Daito-shi, Osaka 574-0034 (JP)**

(74) Representative: **Merkau, Bernhard
c/o Glawe, Delfs, Moll & Partner
Liebherrstrasse 20
Postfach 26 01 62
80058 München (DE)**

(56) References cited:
JP-A- 8 063 750          JP-A- 11 066 726
JP-A- 11 120 566          JP-A- 11 126 340
US-A- 5 475 666

**Description**

**TECHNICAL FIELD**

The present invention relates to a disk apparatus. More specifically, the present invention relates to a disk apparatus which performs an information reproduction by irradiating a laser beam onto a disk recording medium rotating in a CAV (Constant Angular Velocity) system.

**PRIOR ART**

An example of such kind of a disk apparatus is disclosed in a Japanese Patent Laying-open No. 11-66726 [G11B 19/28 7/00 19/2747 20/10] laid-open on March 9, 1999. Upon putting such the disk apparatus to practical use, in a case of reproducing in a ZCAV (Zone CAV) system, as a zone to be reproduced is changed, a linear velocity also becomes different, and as the linear velocity is changed, an optimal reproduction laser power value also becomes different. Thus, in the conventional disk apparatus which performs a reproduction in the ZCAV system, a test writing and a test reading are performed for each linear velocity (zone), and whereby, the optimal reproduction laser power value has to respectively be determined.

However, if every time that the zone to be reproduced is changed, the test writing and the test reading are performed to determine the optimal reproduction laser power, there is a problem that it takes a time for reproducing. Furthermore, there also occurs a problem that the rotating system of the recording medium is changed between the test writing and the test reading, and therefore, it takes a time for the test writing and the test reading.

**SUMMARY OF THE INVENTION**

Therefore, it is a primary object of the present invention to provide a disk apparatus capable of improving a reproduction performance.

The present invention is a disk apparatus according to claim 1 that performs an information reproduction by irradiating a laser beam onto a disk recording medium rotated in a CAV system, comprising: a determining means for determining a reference reproduction laser power value by performing a test writing and a test reading on the disk recording medium in a ZCAV system at a predetermined zone (for example, innermost zone); a specifying means for specifying a linear velocity at a portion onto which the laser beam is to be irradiated when performing the information reproduction; and a calculating means for calculating an optimal reproduction laser power value on the basis of the reference reproduction laser power value, and the linear velocity specified by the specifying means.

In this invention, first, a test writing and a test reading are performed on a predetermined zone (for example, innermost zone) of a disk recording medium in a ZCAV (Zone Constant Angular Velocity) system to determine a reference reproduction laser power value. It is noted that a linear velocity at the innermost periphery in the ZCAV system is the same as a linear velocity in a ZCLV system. Then, when reproducing information from the disk recording medium, the linear velocity according to the zone to be reproduced is specified, and on the basis of the specified linear velocity and the reference reproduction laser power value, the optimal reproduction laser power value at the zone (linear velocity) to be reproduced is calculated.

Therefore, once that the test writing and the test reading are performed to determine the reference reproduction laser power value, on successively performing a reproduction, the linear velocity is specified without performing the test writing and the test reading, and the optimal reproduction laser power value at the linear velocity is obtained by the calculation using the specified linear velocity and the reference reproduction laser power value. Thus, the test writing and the test reading need not to be performed at every timing of reproduction, and therefore, it is possible to shorten a time for reproducing.

Once that the reference reproduction laser power value is determined by performing the test writing and the test reading, it may be possible to update the reference reproduction laser power value by performing the test writing and the test reading after a lapse of a predetermined time period.

According to the present invention, the optimal reproduction laser power value can be obtained by calculation, and the test writing and the test reading need not to be performed at every timing of reproduction, and therefore, it is possible to shorten a time needed for reproducing and to improve a reproducing performance.

The above described objects and other objects, features, aspects and advantages of the present invention will become more apparent from the following detailed description of the present invention when taken in conjunction with the accompanying drawings.

**BRIEF DESCRIPTION OF THE DRAWINGS**

Figure 1 is an illustrative view showing a disc apparatus as an example useful for understanding the present invention;
Figure 2 is an illustrative view showing a configuration of a magneto-optical disk;
Figure 3 is an illustrative view showing a relationship between a linear velocity coefficient and a linear velocity;
Figure 4 is a flowchart showing an operation of the example;
Figure 5 is a flowchart showing the operation of the example;
Figure 6 is a flowchart showing the operation of the example;
Figure 7 (A) is an illustrative view showing a relationship between a reproduction laser power coefficient and a temperature at a rate of 30 Mbps, and Figure 7 (B) is an illustrative view showing a relationship between the linear velocity coefficient and the linear velocity;
Figure 8 is a flowchart showing an operation of an embodiment;
Figure 9 is a flowchart showing the operation of the embodiment; and
Figure 10 is a flowchart showing the operation of the embodiment.

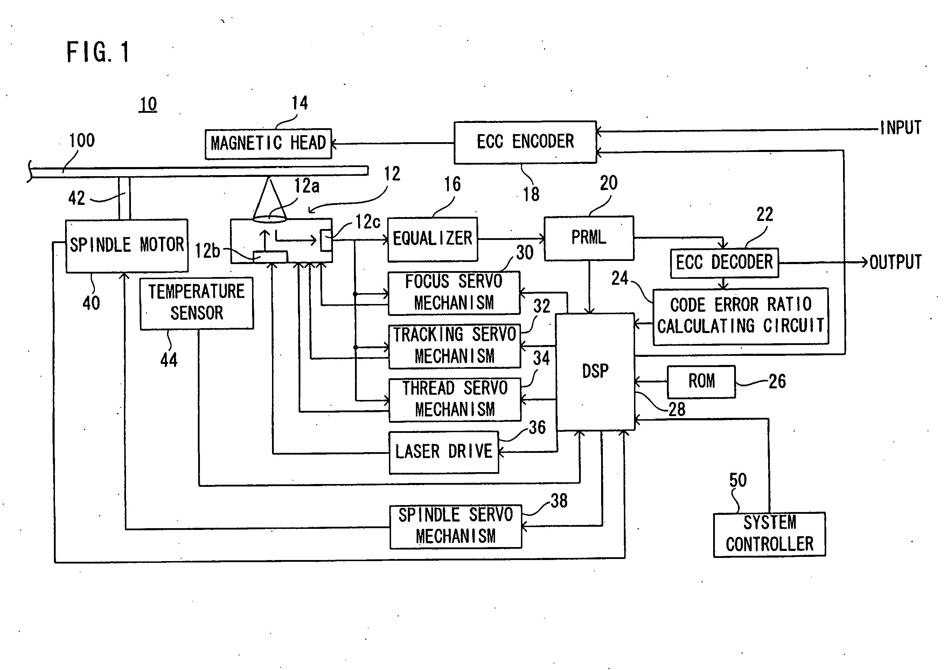

Referring to Figure 1, a disk apparatus 10 includes an optical pickup12. A position of the optical pickup 12 in a radial direction of a magneto-optical disk 100 is controlled by a thread servo mechanism 34. Furthermore, a position of an optical lens 12a provided to the optical pickup 12 in an optical axis direction is controlled by a focus servo mechanism 30. In addition, a position of the optical lens 12a in the radial direction of the magneto-optical disk 100 is controlled by a tracking servo mechanism 32.

A laser power value is set to a laser drive 36 by a control signal applied from a DSP 28, and the laser drive 36 makes a laser diode 12b output a laser beam having the set laser power value. The laser beam output from the laser diode 12b is converged by the optical lens 12a so as to be irradiated onto a recording surface of the magneto-optical disk 100.

The magneto-optical disk 100 includes a reproducing layer and a recording layer, and a desired signal is recorded in the recording layer. When recording the desired signal in the recording layer, the laser beam is irradiated onto the recording layer through the optical lens 12a which is focused to the recording layer and the reproducing layer. When a magnetic field is applied by a magnetic head 14 to the recording layer that has reached to a Curie temperature by the laser beam, and a part of the recording layer that reached to the Curie temperature is magnetized in a direction of the magnetic field. The respective ones of the magnetized portion is called a mark. By controlling the magnetic field generated by the magnetic head 14, the desired signal is recorded on the recording layer of the magneto-optical disk 100.

When reading a signal from the magneto-optical disk 100, a laser beam is irradiated onto the reproducing layer through the optical lens 12a that puts the reproducing layer into focus. The reproducing layer that has reached to a predetermined temperature (lower than the Curie temperature) by irradiation of the laser beam shows a magnetism, and is magnetized depending on the magnetic field carried in the marks of the recording layer. The laser beam reflected by the reproducing layer is deflected depending on the magnetized direction of the reproducing layer, and the optical pickup 12 reads the signal on the basis of a deflected state of the reflected laser beam.

Since a temperature of the recording layer is raised up to the Curie temperature, and a laser beam for recording needs an output power larger than an output power of a laser beam for reproducing. In a system that the information is read-out by transferring data recorded on the recording layer to the reproducing layer, not only an optimal recording laser power value but also an optimal reproducing laser power value depend on the temperature of the magneto-optical disk 100. It is noted that an ambient temperature of the magneto-optical disk 100 is measured by a temperature sensor 44, and a measured result is applied to a DSP 28.

When recording a desired signal on the magneto-optical disk 100, an ECC encoder 18 adds an error correcting code (ECC) to an input signal to convert the signal to which the error correction code is added into an encoded signal. The magnetic head 14 generates a magnetic field depending on the encoded signal to be applied from the ECC encoder 18.

Here, the error correcting code is a code added for each predetermined amount of signals, and the predetermined amount of signals to which the error correcting code was added is called as an ECC block. The ECC block consists of an assembly of a plurality of signals each called as a line. When an error is included in a digital signal within the block, an ECC decoder 22 described later can automatically correct the signal having an error (hereinafter, referred to as "error signal") on the basis of the error correcting code. It is noted that an amount of the error signals capable of being corrected has a certain limitation.

When reproducing a signal recorded in the magneto-optical disk 100, the power of the laser diode 12b is controlled by the laser drive 36, and the laser diode 12b outputs a laser beam in accordance with such a control. The output laser beam is irradiated to a surface of the magneto-optical disk 100 via the optical lens 12a. The laser beam reflected by the surface of the magneto-optical disk 100 is incident to a photodetector 12c through the same optical lens 12a. The photodetector 12c applies a signal according to the incident light (RF signal) to an equalizer 16. The equalizer 16 compensates a frequency characteristic of the RF signal, and applies it to a PRML (Partial Response Maximum Likelihood) circuit 20. The PRML circuit 20 generates a digital signal on the basis of the RF signal, and applies a generated digital signal to the ECC decoder 22. The ECC decoder 22 error-corrects the error signal included in the digital signal received from PRML circuit 20 for each ECC block. Furthermore, the ECC decoder 22 applies to a code error ratio calculating circuit 24 information indicative of how many error signals are corrected per one line of the ECC block, that is, how many error signals are included in one line (hereinafter, referred to as "corrected amount information"). The code error ratio calculating circuit 24 calculates a code error ratio on the basis of the corrected amount information applied from the ECC encoder 22, and applies it to the DSP 28.

The magneto-optical disk 100 is rested on a spindle (not shown) which is connected to a spindle motor 40 via a shaft 42. The DSP 28 applies a control signal to the spindle servo mechanism 38, and the spindle servo mechanism 38 rotates the spindle motor 40 on the basis of the received control signal. Thus, the shaft 42 is rotated, and the spindle, that is, the magneto-optical disk 100 is rotated. Furthermore, the spindle motor 40 generates an FG signal related to a rotating speed of the spindle, and applies the FG signal to the DSP 28. By monitoring the FG signal by the DSP 28, the rotating speed of the spindle connected to the shaft 42, that is, the magneto-optical disk 100 is adequately controlled. Due to the control, the magnet-optical disk 100 is rotated in a ZCLV (Zone Constant Linear Velocity) system in recording the signal, and rotated in a ZCAV (Zone Constant Angular Velocity) system in reproducing the signal. A linear velocity in the ZCLV system is at approximately constant rate of 20 Mbps, and a linear velocity in the ZCAV system is at a rate of 20 Mbps at the minimum and at a rate of 30 Mbps at the maximum. It is noted that the ZCLV system is a subordinate concept of a CLV system, and the ZCAV system is a subordinate concept of a CAV system.

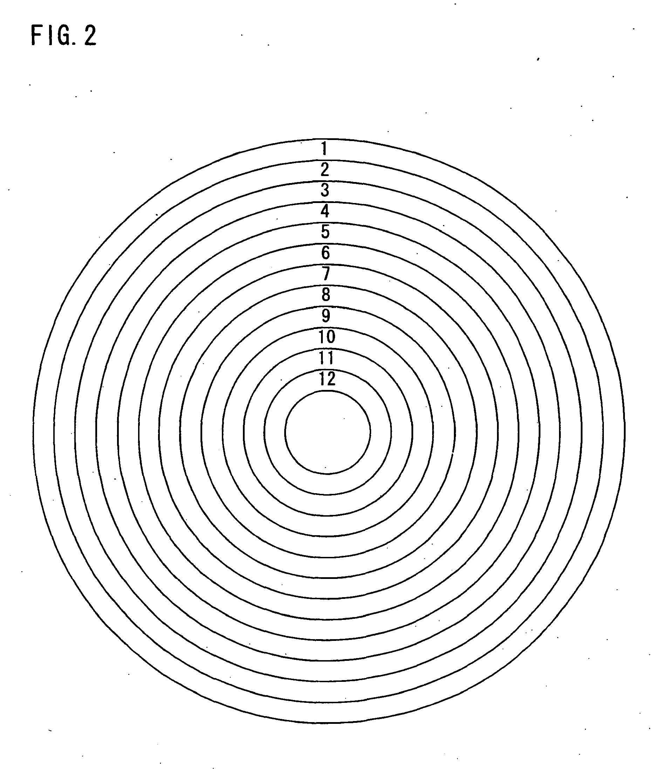

As shown in Figure 2, the magneto-optical disk 100 consists of 12 (twelve) areas called as zones obtained by dividing the tracks formed on the recording surface in a radial direction. Each zone is provided with a test area for performing a test writing and a test reading. In a case of rotating the magneto-optical-disk 100 in the ZCAV system, difference in zones to be irradiated by the laser beam causes difference in a linear velocity of the optical pickup with respect to the track. The linear velocity becomes the largest at the zone 1 located at an outermost side, and the linear velocity becomes the smallest at a zone 12 located at an innermost side. Therefore, in a case of reproduction by rotating the magneto-optical disk 100 in the ZCAV system, an optimal reproduction laser power value becomes different depending on a zone (linear velocity). That is, every time that the zone including the track from which the information to be reproduced is changed, the reproduction laser power value (optimal reproduction laser power value) has to be changed.

As in a conventional disk apparatus, if the test writing and the test reading are performed every time that the optimal reproduction laser power value needs to be changed, it takes time to determine the optimal reproduction laser power value and thus to perform a reproducing process. As in the conventional disk apparatus, if the test writing is executed in the ZCLV system, and the test reading is executed in the ZCAV system, a rotating system of the magneto-optical disk 100 has to be changed between the test writing and test reading, and therefore, it takes more time.

Therefore, in the disk apparatus 10, the test writing and the test reading are both performed by rotating the magneto-optical disk 100 in the ZCLV system (the linear velocity in the ZCLV system (20 Mbps) and the linear velocity at the innermost peripheral in the ZCAV system are the same) to evaluate a reference reproduction laser power value which is an optimal reproduction laser power value in the ZCLV system. Then, the optimal reproduction laser power in the ZCAV system is determined by calculation on the basis of the reference reproduction laser power value, and thereafter, when the optimal reproduction laser power value needs to be changed, that is, the zone including a track to be reproduced is changed and thus the linear velocity is changed, not by performing the test writing and the test reading once again, but by calculation based on the reference reproduction laser power obtained in advance, the optimal reproduction laser power value is obtained.

It is noted that if a recording rate is high, the test writing needs more power consumption to drive the magnetic head in a magneto-optical system in the magnetic field modulating system, and therefore, the test writing should be performed at the linear velocity of 20 Mbps in the innermost periphery in the ZCAV system. In this example, taking into the variety of the disk film, the test writing and the test reading are performed at a rate of 20 Mbps at the zone 7 of the middle periphery in the ZCLV system.

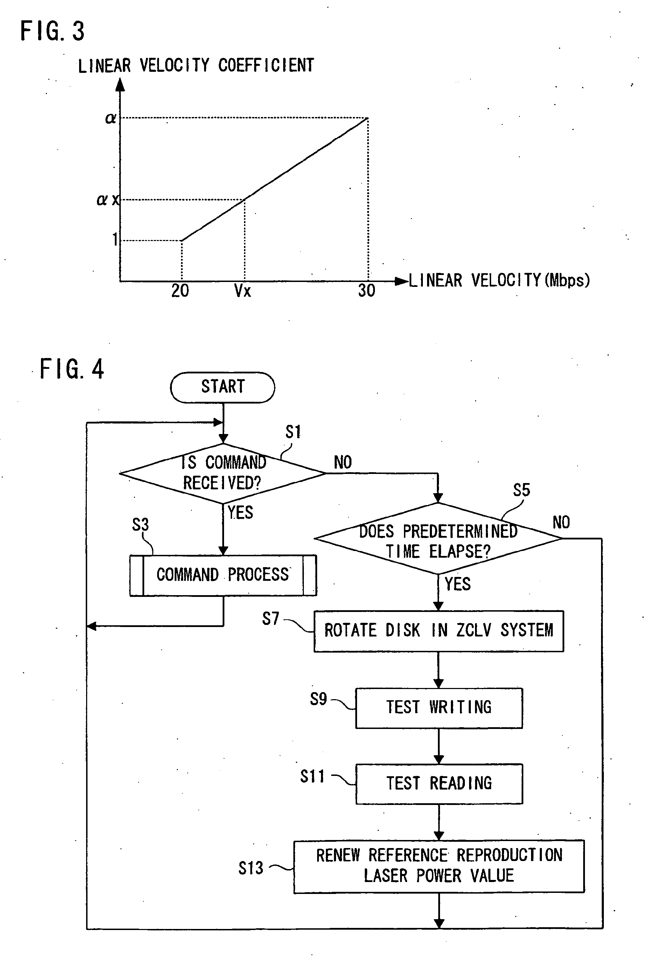

As described above, in the ZCAV system (or CAV system), the optimal reproduction laser power value becomes different depending on the linear velocity at a portion to which the laser beam is to be irradiated. That is, as the linear velocity becomes fast, the optimal laser power value increases, and as the linear velocity becomes slow, the optimal laser power value decreases. Thus, when evaluating the optimal reproduction laser power value on the basis of the reference reproduction laser power value, a linear velocity coefficient having a direct proportion characteristic as shown in Figure 3 is considered.

According to Figure 3, the linear velocity coefficient corresponding to 20 Mbps (the zone 12) of the minimum linear velocity is "1", and the linear velocity coefficient corresponding to 30 Mbps (the zone 1) of the maximum linear velocity is "$\alpha$". Then, the linear velocity coefficient corresponding to the linear velocity "Vx" is obtained by an equation (1). The optimal reproduction laser power value "Pvx" at the linear velocity "Vx" is obtained by an equation (2).

$$\alpha_x = \{(V_x-20)/(30-20)\} \times (\alpha-1) + 1 \qquad \cdots(1)$$

$$P_{vx} = \alpha_x \times P_t \qquad \cdots(2)$$

Hereinafter, with referring to Figure 4 to Figure 6, an operation of the disk apparatus 10 is described as an operation of the DSP 28. The DSP 28 of the disk apparatus 10 determines, if receiving a command from a system controller 50 (see Figure 1), that the command is received in a step S1. Here, a host is a CPU of a PC when the disk apparatus 10 is a disk drive of a personal computer (PC) (not shown), or a CPU of a digital camera when the disk apparatus 10 is a disk drive of a digital camera (not shown). When it is determined the command is received in the step S1, a reproduction process or the like is performed depending on the received command in a "command processing" routine in a step S3. After completion of the "command processing", the process returns to the step S1.

In a case that it is determined that the command is not received in the step S1, it is determined whether or not a predetermined time period elapses in a step S5. The predetermined time period is a time period that elapses after completion of updating the reference reproduction laser power value "Pt" in a step S11. It is determined that a predetermined time period elapses from the update of the reference reproduction laser power value "Pt", the magneto-optical disk 100 is rotated in the ZCLV system in a step S7, and the test writing is performed on the test area included in the zone of the track currently traced in a step S9, and the optimal reproduction laser power value in the ZCLV system is determined by performing the test reading in a step S11. Since the test writing and the test reading are executed in the same ZCLV system, and the rotating system of the magneto-optical disk 100 needs not to be changed, capable of shortening a time period needed for the test writing and the test reading. In a step S13, the reference reproduction laser power value "Pt" is updated by the optimal reproduction laser power value. Then, the process returns to the step S1.

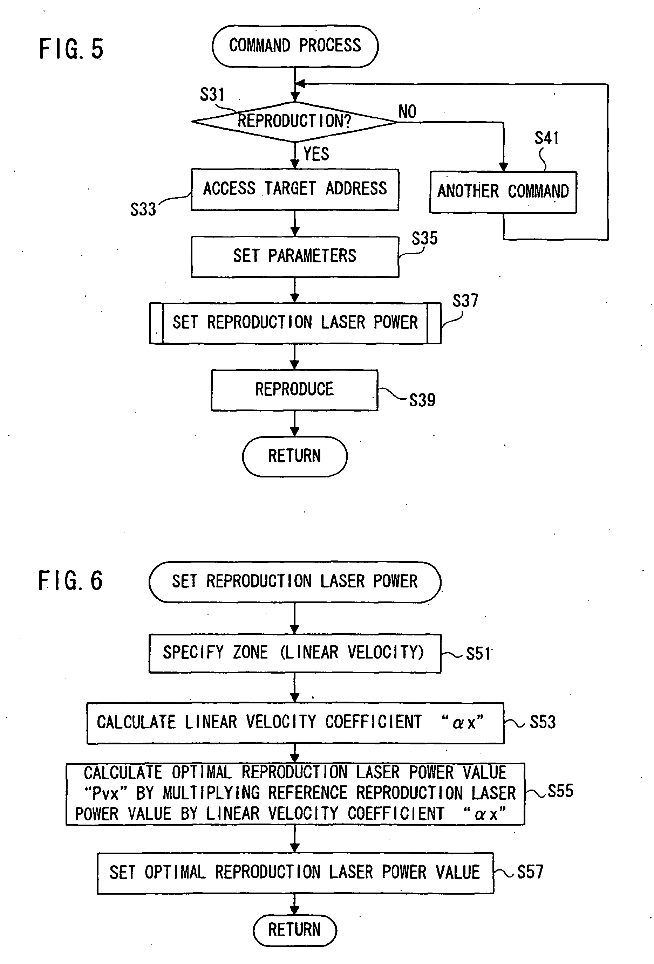

The "command processing" in the step S3 is executed by a procedure shown in Figure 5 flowchart. It is noted that a description is made on only a case where a reproduction command is applied from the system controller 50 of the host in Figure 5. When a reproduction command is applied from the system controller 50 of the host, the DSP 28 determines to be a reproduction process in a step S31 in Figure 5, and accesses a target address in a step S33. In a step S35, the DSP 28 performs the setting of respective parameters such as cutoff frequency of an RF low-pass filter, timing of phase matching of a header of an MO signal, and etc. Then, in a step S37, the optimal reproduction laser power value in the ZCAV system is set on the basis of the reference reproduction laser power value "Pt" updated in the step S13 in Figure 4, and a reproduction is performed according to the reproduction command with the set optimal reproduction laser power value in a step S39. After completion of the reproduction, the process is restored to the hierarchical upper routine. If it is determined that it is not the reproduction in the step S31, another process according to the command is executed in a step S41, and then, the process returns the step S31.

A "setting the reproduction laser power" processing in the step S37 is executed by a procedure in Figure 6 flowchart. First, in a step S51, a zone including the track to be currently reproduced is specified, and the linear velocity "Vx" optimum for the track is specified. Then, in a step S53, the linear velocity "Vx" is substituted to the equation 1 to calculate the linear velocity coefficient " αx". In a step S55, the linear velocity coefficient "αx" and the reference reproduction laser power value "Pt" are substituted to the equation 2 to calculate the optimal reproduction laser power value "Pvx" at that linear velocity. In a step S57, the optimal reproduction laser power value "Pvx" is set to the laser drive 36 (see Figure 1). After completion of the setting, the process is restored to the hierarchical upper routine.

As described above, in the disk apparatus 10, once that the optimal reproduction laser power value "Pt" (reference reproduction laser power value "Pt") is obtained on the basis of the test writing and the test reading, the optimal reproduction laser power value "Pvx" depending on the linear velocity "Vx" is obtained by calculating the reference reproduction laser power value "Pt" and the linear velocity coefficient "αx" in the successive processes. Accordingly, the test writing and the test reading are not performed every time that the optimal reproduction laser power value has to be changed. Rather, the optimal reproduction laser power value is calculated by arithmetic operation. Thus, it is possible to shorten a time period needed for determining the optimal reproduction laser power value, capable of improving the reproduction performance or function.

In the above-described example, a method of changing the optimal reproduction laser power value depending on the linear velocity is taken. In the disk apparatus 10 of an embodiment of the invention to be described next, the optimal reproduction laser power value is determined in consideration of the linear velocity as well as an ambient temperature of the magneto-optical disk 100.

The disk apparatus 10 of this embodiment has the same configuration as Figure 1, and therefore, the description thereof is omitted. In the disk apparatus 10 of this embodiment, first, a relational expression (of a straight line) between a temperature (the ambient temperature of the magneto-optical disk 100) and a reproduction laser power value at the linear velocity of 20 Mbps (minimum linear velocity) is prepared as a table. The table is called a "temperature/reproduction power table". A reproduction laser power value capable of being obtained with reference to the "temperature/reproduction power table" on the basis of the temperature is called a "reference reproduction laser power value". It is noted that the temperature and the reference reproduction power value are in a proportional relationship (linear relationship with a constant inclination).

First, the ambient temperature (for example, 25 °C) of the magneto-optical disk 100 is obtained from the temperature sensor 44, and the optimal reproduction laser power value at the linear velocity of the zone 7 at a temperature of 25 °C is obtained by performing the test writing and the test reading on the test area of the zone 7 in the ZCLV system. Since the test writing and the test reading are performed in the ZCLV system, the optimal reproduction laser power value may also be the reference reproduction laser power value "Pr (Z12, T25)" at the linear velocity (20 Mbps) of the zone 12 in a case of being reproduced at the temperature of 25 °C in the ZCLV system, Then, the linear line is moved in parallel while the inclination thereof is maintained on the basis of the obtained temperature and the optimal reproduction laser power value to correct the "temperature/reproduction power table". The "temperature/reproduction power table" is corrected as described above by performing the test writing and the test reading when the change in temperature is large. Conversely, during the change in temperature is not large, the reference reproduction laser power value is determined on the basis of the ambient temperature with reference to the "temperature/reproduction power table" without performing the test writing and the test reading.

On the assumption that the optimal reproduction laser power value "Pr (Z3, T25)" at the temperature of 25 °C at the linear velocity of the zone 3 is to be obtained, first, with reference to the "temperature/reproduction power table" at the temperature of 25 °C, the reference reproduction laser power value "Pr (Z12, T25)" at the linear velocity (20 Mbps) of the zone 12 at the temperature of 25 °C is obtained.

Next, the linear velocity coefficient at the linear velocity (30 Mbps) of the zone 1 at the temperature of 25 °C is obtained. As described above, the optimal reproduction laser power value has a direct proportion characteristic with respect to the linear velocity, but has an inverse proportion characteristic with respect to the temperature. That is, if the temperature is high, the optimal reproduction laser power value decreases, and the temperature is low, the optimal reproduction laser power value increases. Thus, in this embodiment, in evaluating the optimal reproduction laser power value, first, the linear velocity coefficient is corrected in consideration of the temperature, and the corrected linear velocity coefficient is multiplied by the reference reproduction laser power value.

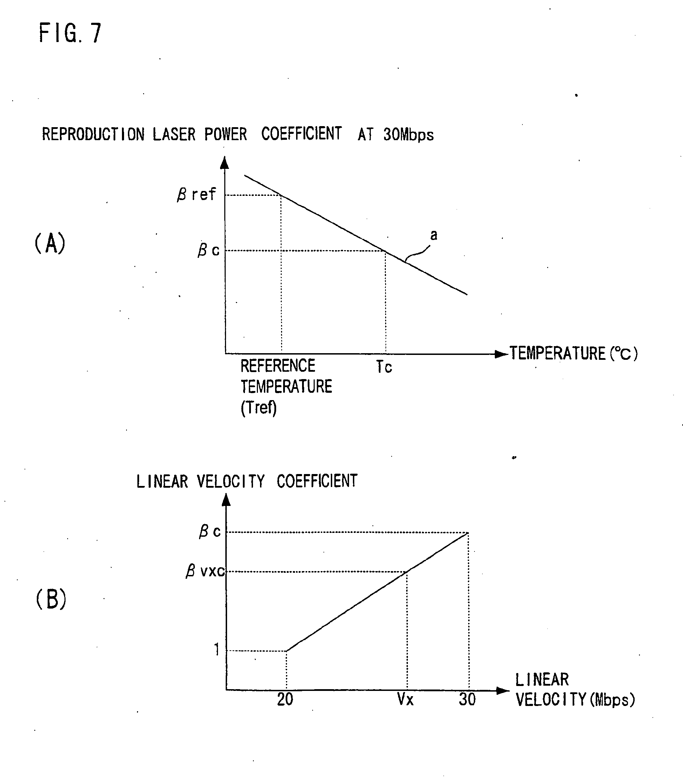

The linear velocity coefficient (reproduction laser power coefficient at the 30 Mbps) has an inverse proportion characteristic with respect to the temperature as shown in Figure 7 (A). With the assumption that the inclination of the linear line is "a", and the linear velocity coefficient is " βref" at the reference temperature "Tref" (20°C, the room temperature), the linear velocity coefficient "βc" at the temperature "Tc" (for example, 25 °C) at the zone 1 is obtained according to an equation (3). Noted that the inclination "a" depends on the linear velocity, and the linear velocity = 30 Mbps is assumed in Figure 7 (A) example.

$$\beta c = \beta\,ref\text{-}a \times (Tc\text{-}Tref) = \beta\,ref\text{-}a \times (25\text{-}Tref) \qquad \cdots(3)$$

Thus, although the linear velocity coefficient "βc" at the temperature of 25 °C at the zone 1 is obtained, it is the optimal reproduction laser power value at the 25 °C at the zone 3 that has to finally be obtained. Thus, with referring to a graph shown in Figure 7(B), the optimal reproduction laser power value is obtained as done in Figure 1 embodiment. More specifically, the linear velocity coefficient "βvxc" corresponding to the linear velocity "Vx" at the zone 3 is obtained according to an equation (4), and the optimal reproduction laser power value is obtained according to an equation (5).

$$\beta vxc = \{(Vx\text{-}20)/(30\text{-}20) \times (\beta c\text{-}1) + 1 \qquad \cdots(4)$$

$$Pvx\,(Z3, T25) = \beta vxc \times Pr\,(Z12, T25) \qquad \cdots(5)$$

Thus, if the optimal reproduction laser power value is obtained, when the optimal reproduction laser power value is to be obtained next, the reference reproduction laser power value is obtained not by performing the test reading and the test writing, but with reference to the "temperature/reproduction power table" on the basis of the temperature.

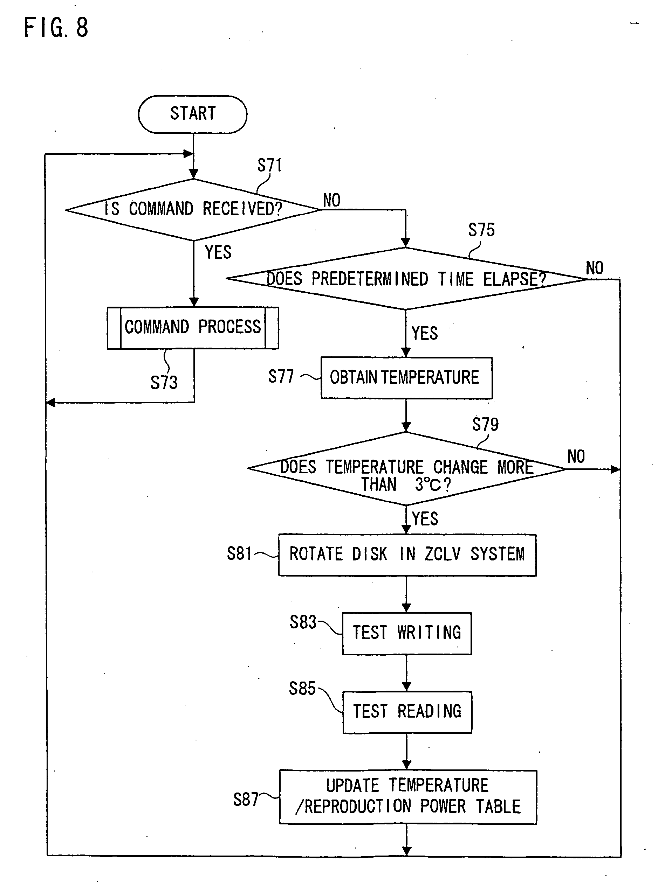

Hereafter, by use of Figure 8 to Figure 10, an operation of the disk apparatus 10 in this embodiment is described as an operation of the DSP 28. The DSP 28 of the disk apparatus 10 receives a command from the system controller 50 (see Figure 1), and then determines the command is received in a step S71. Then, in a "command processing" routine in a step S73, a processing such as a reproduction is performed depending on the received command.

In a case that it is determined the command is not received in the step S71, it is determined whether or not a predetermined time period elapses in a step S75. The predetermined time period is a time period that elapses after the "temperature/reproduction power table" is updated in a step S87 described later. When it is determined that the predetermined time period elapses from the update of the "temperature/reproduction power table" previously performed in the step S75, the ambient temperature of the magneto-optical disk 100 is obtained from the temperature sensor 44 in a step S77. Then, in a step S79, it is determined whether or not the change in temperature is equal to or more than 3 °C from the temperature previously obtained. In a case of obtaining the ambient temperature at first, "YES" is determined in the step S79.

When the change in temperature is equal to or more than 3 °C, the magneto-optical disk 100 is rotated in the ZCLV system in a step S81. The test writing is performed on the test area of the zone 7 in a step S83, and the test reading is performed to determine the optimal reproduction power value in the ZCLV system in a step S85. The test writing and the test reading are performed in the same ZCLV system, that is, the magneto-optical disk 100 needs not to change the rotating system of the magneto-optical disk 100, capable of shortening the time needed for performing the test writing and the test reading. In a step S87, on the basis of the determined optimal reproduction laser power value and the temperature value obtained in the step S79, the straight or linear line is moved in parallel while the inclination thereof is maintained to update the "temperature/reproduction power table". Then, the process returns to the step S71.

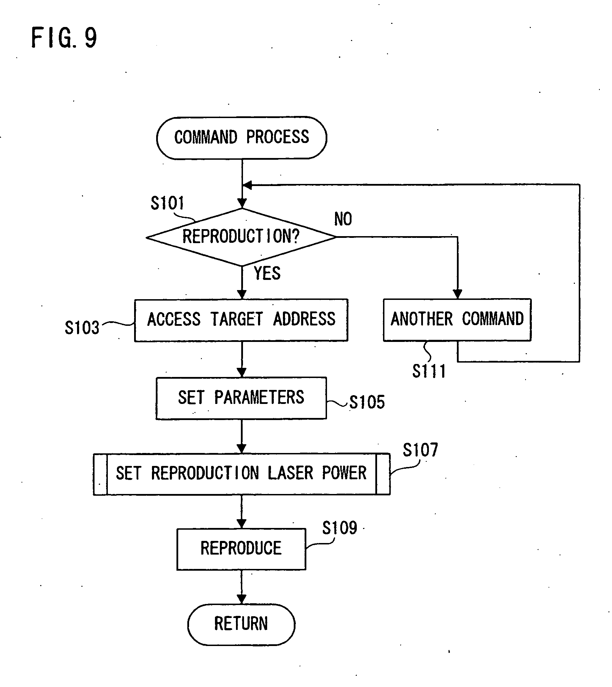

The "command processing" in the step S73 is executed according to the procedure in Figure 9 flowchart. In Figure 9, a description is made only on a case where a reproduction command is applied from the system controller 50 of the host. When a reproduction command is applied form the system controller 50 of the host, the DSP 28 determines to be a reproducing process in a step S101 in Figure 9, and accesses a target address in a step S103. In a step S105, a setting of respective parameters such as cutoff frequency of an RF low-pass filter, timing of phase matching of a header of an MO signal, and etc. is performed.

In a step S107, the optimal reproduction laser power value in the ZCAV system is set on the basis of the "temperature/ reproduction power table" updated in the step S87 in Figure 8, and in a step S 109, a reproduction corresponding to the reproduction command is performed on the basis of the optimal reproduction laser power value set.

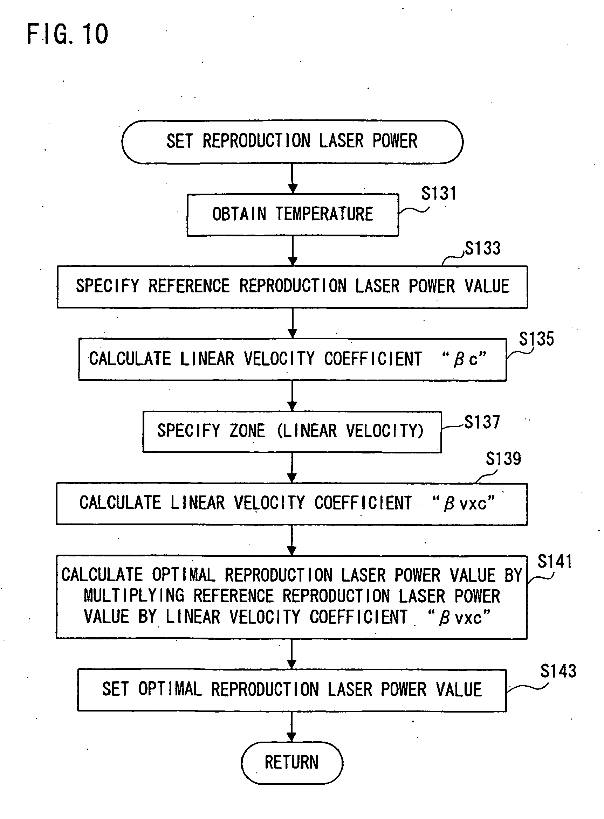

The "reproduction laser power setting" process in the step S 107 is executed by the procedure shown in Figure 10 flowchart. First, in a step S 131, the ambient temperature of the magneto-optical disk 100 is obtained from the temperature sensor 44. Suppose that the ambient temperature obtained at this time is 25 °C, for example. In a step S133, with referring to the "temperature/reproduction power table" at the temperature of 25 °C of the ambient temperature of the magneto-optical disk 100 obtained in the step S 131, the reference reproduction laser power value "Pr (Z12, T25)" at the linear velocity of the zone 12 at the temperature of 25 °C is specified.

Next, in a step S135, the linear velocity coefficient (the reproduction laser power coefficient at the 30 Mbps) "βc" is calculated by substituting the "Tc" = 25 (°C) into the equation 3.

Furthermore, in a step S137, the linear velocity "Vx" optimum for the zone including a track to be reproduced now, for example, the zone 3 is specified. In a step S139, the linear velocity coefficient "βvxc" is calculated by substituting the linear velocity "Vx" into the equation 4.

Then, in a step S141, the optimal reproduction laser power value Pr (Z3, T25) at the temperature and the linear velocity is calculated by substituting into the equation 5 the reference reproduction laser power value "Pr (Z12, T25)" and the linear velocity coefficient "βvxc". In a step S143, the optimal reproduction laser power value Pr (Z3, T25) is set to the laser drive 36 (see Figure 1).

As described above, in the disk apparatus 10 of this embodiment, once the test writing and the test reading are performed to update the "temperature/reproduction power table", the ambient temperature of the magneto-optical disk 100 and the optimal reproduction laser power value corresponding to the linear velocity are calculated without performing the test writing and the test reading in successive processes. Accordingly, a time period needed for determining the optimal reproduction laser power value is shortened, capable of improving a reproducing performance or function.

It is noted that the above-described embodiment is variously changed in mode or configuration. For example, in the above-described example, the reference reproduction laser power value is the optimal reproduction laser power value obtained as a result of the test writing and the test reading. However, the reference reproduction laser power value may be a laser power value obtained by adding a predetermined value (for example, 2% of a lower limit laser power value) to a lower limit laser power value that is reproducible by the test reading, that is, capable of correcting the error signal included in the reproducing signal with the error correcting code or may be a laser power value obtained by subtracting a predetermined value (for example, 2% of an upper limit laser power value) from an upper limit laser power value that can be corrected by the error correcting code. In these cases, it is appropriate that the reproduction laser power value to be reproduced by the test reading is changed in one direction, that is, from the lower limit direction to the upper limit direction or from the upper limit direction to the lower limit direction to obtain a reproducible position. Accordingly, a time period to obtain the reference reproduction laser power value by the test writing and the test reading is shortened. Furthermore, the lower limit reproducible laser power value is less individual difference for each magneto-optical disk, and if the predetermined value added to the lower limit laser power value is adequately determined for one magneto-optical disk, more adequate optimal reproduction laser power value is obtained for any magnet-optical disk.

In addition, the optimal laser power value is obtained by multiplying the reference reproduction laser power value by the linear velocity coefficient. However, it may be possible that the optimal recording laser power value is obtained by the same means. That is, the optimal recording laser power value may be calculated by multiplying the reference recording laser power value by the linear velocity coefficient.

Although the present invention has been described and illustrated in detail, it is clearly understood that the same is by way of illustration and example only and is not to be taken by way of limitation, the scope of the present invention being limited only by the terms of the appended claims.

## Claims

1. A disk apparatus (10) in which a laser beam is irradiated onto a disk recording medium (100) which is separated into a plurality of zones in its radial direction and rotated in a ZCAV System so as to reproduce information from said disk recording medium, and an optimum reproducing laser power vatue ($P_{yx}$) of the laser beam irradiated onto a desired first zone of said disk recording medium at an ambient temperature $T_c$ is calculated by multiplying a reference reproducing laser power value ($P_y$) that is for a predetermined first linear velocity at said ambient temperature $T_c$ by a coefficient ($\beta vxc$) according to a linear velocoity ($V_y$) in said first zone, wherein said coefficient is a cofficient corresponding to said linear velocity ($V_x$) of said first zone obtained by linear interpolation based on a linear relationship that is defined by a line crossing a first point determined by a first linear velocity and a first linear velocity coefficient according to said first linear velocity and a second point determined by a second linear velocity and a second linear velocity coefficient ($\beta c$) according to said second linear velocity, said second linear velocity coefficient being given by $\beta_c = \beta_{ref} - a(T_c - T_{ref})$ wherein $T_c$ is the ambiant temperature $T_{ref}$ is a reference ambient temperature, $\beta ref$ is a third linear velocity coefficient according to said second linear velocity coefficient at said reference ambiant temperature and a is an inclination dependant of said second linear velocity.

2. A disk apparatus according to claim 1, **characterized in that** said reference reproducing laser power value is specified on the basis of a table which contains a relationship between the ambient temperature of said disk recording medium (100) and a reproducing laser power value at said first linear velocity.

3. A disk apparatus according to claim 2 **characterized in that** said table is updated based upon the ambient temperature of said disk recording medium (100) and an optimum reference reproducing laser power value determined by performing a test write and a test read on said disk recording medium (100) at said first linear velocity.

4. A disk apparatus according to claim 3, **characterized in that** an updating of said table is performed when a predetermined time lapses and the ambient temperature varies more than a predetermined threshold value.

## Patentansprüche

1. Plattenlaufwerk (10), in welchem ein Laserstrahl auf ein Plattenaufzeichnungsmedium (100) gestrahlt wird, das in radialer Richtung in eine Anzahl von Zonen getrennt ist und in einem ZCAV-System gedreht wird, um Information von dem Plattenaufzeichnungsmedium wiederzugeben, und ein optimaler WiedergabeLaserleistungswert Pvx des Laserstrahls, der auf die gewünschte erste Zone des Plattenaufzeichnungsmediums bei einer Umgebungstemperatur T gestrahlt wird, durch Multiplizieren eines Referenzwiedergabelaserleistungswertes Pr, der für eine vorbestimmte erste lineare Geschwindigkeit gilt, bei der Umgebungstemperatur T mit einem Koeffizienten ($\beta vxc$) gemäß einer linearen Geschwindigkeit Vx in der ersten Zone berechnet wird, wobei der Koeffizient ein Koeffizient entsprechend der linearen Geschwindigkeit Vx der ersten Zone ist, erhalten durch lineare Interpolation basierend auf einer linearen Beziehung, die definiert ist durch eine Linie, die den ersten Punkt, bestimmt durch eine erste lineare Geschwindigkeit und einen ersten linearen Geschwindigkeitskoeffizienten gemäß dieser ersten linearen Geschwindigkeit, und einen zweiten Punkt, bestimmt durch eine zweite lineare Geschwindigkeit und einen zweiten linearen GeschwindigkeitskoefFzienten ($\beta c$) gemäß dieser zweiten linearen Geschwindigkeit, schneidet, wobei der zweite lineare Geschwindigkeitskoeffizient gegeben ist durch $\beta_c = \beta_{ref} - a(T_c - T_{ref})$, wobei Tc die Umgebungstemperatur ist, $T_{ref}$ eine Referenzumgebungstemperatur ist, $\beta_{ref}$ ein dritter linearer Geschwindigkeitskoeffizient gemäß dem zweiten linearen Geschwindigkeitskoeffizienten bei der Referenzumgebungstemperatur ist und a eine Neigung in Abhängigkeit von der zweiten linearen Geschwindigkeit ist.

2. Plattenlaufwerk nach Anspruch 1, **dadurch gekennzeichnet, dass** der Referenzwiedergabelaserleistungswert auf der Basis einer Tabelle spezifiziert wird, die eine Beziehung zwischen der Umgebungstemperatur des Plattenaufzeichnungsmediums (100) und einem Wiedergabelaserleistungswert bei der ersten linearen Geschwindigkeit enthält.

3. Plattenlaufwerk nach Anspruch 2, **dadurch gekennzeichnet, dass** die Tabelle basierend auf der Umgebungstemperatur des Plattenaufzeichnungsmediums (100) und einem optimalen Referenzwiedergabelaserleistungswert aktualisiert wird, der durch Durchführen eines Schreibtests und eines Lesetests an dem Plattenaufzeichnungsmedium (100) mit der ersten linearen Geschwindigkeit bestimmt wird.

4. Plattenlaufwerk nach Anspruch 3, **dadurch gekennzeichnet, dass** ein Aktualisieren der Tabelle durchgeführt wird, wenn eine vorbestimmte Zeit abgelaufen ist und die Umgebungstemperatur um mehr als ein vorbestimmter Schwellwert variiert.

## Revendications

1. Lecteur de disque (10) dans lequel un faisceau laser est irradié sur un support d'enregistrement de disque (100) séparé en une pluralité de zones dans sa direction radiale et tourné dans un système ZCAV de façon à reproduire des informations à partir dudit support d'enregistrement de disque, et une valeur (Pyx) de puissance de laser de reproduction optimale pour le faisceau laser irradié sur une première zone désirée dudit support d'enregistrement de disque à une température ambiante $T_c$ est calculée en multipliant une valeur de puissance de laser de reproduction de référence (Py) pour une première vitesse linéaire prédéterminée à ladite température ambiante $T_c$ par un coefficient ($\beta$ vxc) selon une vitesse linéaire (V) dans ladite première zone, dans lequel
ledit coefficient est un coefficient correspondant à ladite vitesse linéaire (Vx) de ladite première zone obtenue par interpolation linéaire basée sur une relation linéaire définie par une ligne croisant un premier point déterminé par une première vitesse linéaire et un coefficient de première vitesse linéaire selon ladite première vitesse linéaire et un second point déterminé par une seconde vitesse linéaire et un coefficient de seconde vitesse linéaire ($\beta$ c) selon ladite seconde vitesse linéaire, ledit coefficient de seconde vitesse linéaire étant donné par $B_C = B_{ref} - a (T_C - T_{ref})$, dans lequel $T_C$ est la température ambiante, $T_{ref}$ est une température ambiante de référence, $\beta_{ref}$ est un coefficient de troisième vitesse linéaire selon ledit coefficient de seconde vitesse linéaire à ladite température ambiante de référence, et a est une inclinaison dépendant de ladite seconde vitesse linéaire.

2. Lecteur de disque selon la revendication 1, **caractérisé en ce que** ladite valeur de puissance de laser de reproduction de référence est spécifiée sur la base d'un tableau contenant une relation entre la température ambiante dudit support d'enregistrement de disque (100) et une valeur de puissance de laser de reproduction à ladite première vitesse linéaire.

3. Lecteur de disque selon la revendication 2, **caractérisé en ce que** ledit tableau est actualisé sur la base de la température ambiante dudit support d'enregistrement de disque (100) et une valeur optimale de puissance de laser de reproduction de référence déterminée en réalisant un test d'écriture et un test de lecture sur ledit support d'enregistrement de disque (100) à ladite première vitesse linéaire.

4. Lecteur de disque selon la revendication 3, **caractérisé en ce qu'**une actualisation dudit tableau est réalisée quand une durée prédéterminée s'écoule et que la température ambiante varie de plus d'une valeur de seuil prédéterminée.

# FIG. 1

EP 1 477 970 B1

# FIG. 2

FIG. 3

LINEAR VELOCITY COEFFICIENT

FIG. 4

FIG. 5

COMMAND PROCESS

S31

REPRODUCTION? ── NO ──→ ANOTHER COMMAND  S41

│ YES

ACCESS TARGET ADDRESS  S33

SET PARAMETERS  S35

SET REPRODUCTION LASER POWER  S37

REPRODUCE  S39

RETURN

FIG. 6

SET REPRODUCTION LASER POWER

SPECIFY ZONE (LINEAR VELOCITY)  S51

CALCULATE LINEAR VELOCITY COEFFICIENT "αx"  S53

CALCULATE OPTIMAL REPRODUCTION LASER POWER VALUE "Pvx" BY MULTIPLYING REFERENCE REPRODUCTION LASER POWER VALUE BY LINEAR VELOCITY COEFFICIENT "αx"  S55

SET OPTIMAL REPRODUCTION LASER POWER VALUE  S57

RETURN

FIG. 7

REPRODUCTION LASER POWER COEFFICIENT AT 30Mbps

(A)

(B)

## FIG. 8

```
                    START

                       │
                       ▼
                  ┌─S71
          ◇ IS COMMAND RECEIVED? ◇─── NO ───┐
                       │                     │
                      YES                    ▼       ┌─S75
                       │          ◇ DOES PREDETERMINED TIME ELAPSE? ◇── NO ──┐
                       ▼                     │                               │
            ┌──────────────────┐           YES                              │
            │ COMMAND PROCESS  │            │                               │
            └──────────────────┘            ▼                               │
                  │                ┌──────────────────┐                     │
                 S73               │ OBTAIN TEMPERATURE │  S77              │
                  │               └──────────────────┘                     │
                  │                        │                                │
                  │                        ▼        ┌─S79                   │
                  │        ◇ DOES TEMPERATURE CHANGE MORE ◇── NO ──────────┤
                  │        ◇        THAN  3°C?        ◇                     │
                  │                        │                                │
                  │                       YES                               │
                  │                        ▼                                │
                  │          ┌──────────────────────────┐                  │
                  │    S81──│ ROTATE DISK IN ZCLV SYSTEM │                  │
                  │          └──────────────────────────┘                  │
                  │                        │                                │
                  │                        ▼                                │
                  │            ┌──────────────────┐                        │
                  │      S83──│   TEST WRITING    │                        │
                  │            └──────────────────┘                        │
                  │                        │                                │
                  │                        ▼                                │
                  │            ┌──────────────────┐                        │
                  │      S85──│   TEST READING    │                        │
                  │            └──────────────────┘                        │
                  │                        │                                │
                  │                        ▼                                │
                  │      ┌────────────────────────────────┐                │
                  │ S87─│   UPDATE TEMPERATURE            │                │
                  │      │   /REPRODUCTION POWER TABLE     │                │
                  │      └────────────────────────────────┘                │
                  │                        │                                │
                  │                        ▼                                │
                  └────────────────────────┴────────────────────────────────┘
```

FIG. 9

```
              ┌─────────────────────┐
              │   COMMAND PROCESS   │
              └─────────────────────┘
                         │
                         ▼
   S101          ◇─────────────────◇      NO
              REPRODUCTION? ───────────────────┐
                 ◇───────────◇                 │
                         │ YES                  │
                         ▼                      ▼
   S103   ┌──────────────────────┐   ┌──────────────────────┐
          │ ACCESS TARGET ADDRESS│   │   ANOTHER COMMAND    │
          └──────────────────────┘   └──────────────────────┘
                         │                 S111
                         ▼
          ┌──────────────────────┐
          │    SET PARAMETERS    │ ─── S105
          └──────────────────────┘
                         │
                         ▼
        ┌──────────────────────────────┐   S107
        │ SET REPRODUCTION LASER POWER  │
        └──────────────────────────────┘
                         │
                         ▼
          ┌──────────────────────┐   S109
          │      REPRODUCE       │
          └──────────────────────┘
                         │
                         ▼
              ┌─────────────────────┐
              │      RETURN         │
              └─────────────────────┘
```

# FIG. 10

$$\text{SET REPRODUCTION LASER POWER}$$

OBTAIN TEMPERATURE — S131

SPECIFY REFERENCE REPRODUCTION LASER POWER VALUE — S133

CALCULATE LINEAR VELOCITY COEFFICIENT "$\beta c$" — S135

SPECIFY ZONE (LINEAR VELOCITY) — S137

CALCULATE LINEAR VELOCITY COEFFICIENT "$\beta vxc$" — S139

CALCULATE OPTIMAL REPRODUCTION LASER POWER VALUE BY MULTIPLYING REFERENCE REPRODUCTION LASER POWER VALUE BY LINEAR VELOCITY COEFFICIENT "$\beta vxc$" — S141

SET OPTIMAL REPRODUCTION LASER POWER VALUE — S143

RETURN

**EP 1 477 970 B1**

**REFERENCES CITED IN THE DESCRIPTION**

**Patent documents cited in the description**

- JP 11066726 A